# EUROPEAN PATENT SPECIFICATION

(11) **EP 0 787 609 B1**
(45) Date of publication and mention of the grant of the patent: **13.02.2002**
(21) Application number: 96927887.8
(22) Date of filing: 22.08.1996
(51) Int. Cl.: B60H 1/08, F24J 3/00

(54) **VISCOUS HEATER**
VISCOSITÄTSHEIZUNG
CHAUFFAGE A VISCOSITE

(30) Priority: 25.08.1995 JP 21703595
(43) Date of publication of application: 06.08.1997
(73) Proprietor: Kabushiki Kaisha Toyota Jidoshokki, Kariya-shi, Aichi-ken (JP)
(72) Inventor: BAN, Takashi Kabushiki Kaisha Toyoda Jidoshokki, Aichi-ken 448 (JP); MORI, Hidefumi Kabushiki Kaisha Toyoda Jidoshokki, Aichi-ken 448 (JP); YAGI, Kiyoshi Kabushiki Kaisha Toyoda Jidoshokki, Aichi-ken 448 (JP)
(74) Representative: Pellmann, Hans-Bernd, Dipl.-Ing.
(86) International application number: PCT/JP96/02361
(87) International publication number: WO 97/08001

(56) References cited:
- EP-A- 0 053 375
- EP-A- 0 687 584
- FR-A- 2 505 996
- JP-A- 2 246 823

## Description

### Technical Field

The present invention relates to a viscous heater according to the preamble of claim 1.

### Background Art

Conventionally, in Japanese Unexamined Patent Publication (KOKAI) No. 2-246,823, a viscous heater is disclosed which is utilized as a heating apparatus for a vehicle. In this viscous heater, a front housing and a rear housing are disposed so as to face with each other, and are fastened by through bolts, thereby forming a heat-generating chamber and a water jacket therein. The water jacket is disposed around an outer region of the heat-generating chamber. In the water jacket, circulating water is circulated so that it is taken in through a water inlet port, and that it is delivered out to an external heating circuit through a water outlet port. In the front housing, a driving shaft is held rotatably via a bearing apparatus. To the driving shaft, a rotor is fixed so that it can rotate in the heat-generating chamber. A wall surface of the heat-generating chamber and an outer surface of the rotor constitute labyrinth grooves which approach to each other. In a space between the wall surface of the heat-generating chamber and the outer surface of the rotor, a viscous fluid, such as a silicone oil, is interposed.

In the viscous heater built into a vehicle heating apparatus, the rotor rotates in the heat-generating chamber when the driving shaft is driven by an engine. Accordingly, the viscous fluid is caused to generate heat by shearing in the space between the wall surface of the heat-generating chamber and the outer surface of the rotor. The thus generated heat is heat-exchanged to the circulating water in the water jacket. The heated circulating water is used at the heating circuit to heat a vehicle.

Moreover, in Japanese Unexamined Utility Model Publication (KOKAI) No. 4-11,716, a viscous heater is disclosed in which fins are projected into a water jacket. In this viscous heater, heat exchange can be carried out with a relatively high efficiency, because the fins enlarge a surface area of a wall surface constituting the water jacket.

However, in the viscous heater set forth in Japanese Unexamined Patent Publication (KOKAI) No. 2-246,823, heat exchange cannot necessarily be carried out fully, because the surface area of the wall surface constituting the water jacket is relatively small, and because there is a fear of short-circuiting or residing the circulating water in the water jacket.

Likewise, in the viscous heater set forth in Japanese Unexamined Utility Model Publication (KOKAI) No. 4-11,716, heat exchange cannot necessarily be carried out fully, because there is a fear of short-circuiting or residing the circulating water in the water jacket.

Document EP-A-0 687 584 discloses a viscous heater comprising a housing in which a heat generating chamber and a radiator chamber are formed. The radiator chamber is located adjacent to the heat generating chamber. Furthermore, means are provided ensuring a circulation of a circulating fluid through the radiator chamber. In the heat generating chamber a rotor driven by a driving shaft is disposed and a viscous fluid interposed in a space between a wall surface of the heat generating chamber and a surface of the rotor is caused to generate heat by the rotation of the rotor. To enlarge the surface area of a wall surface constituting the radiator chamber, fins are formed in the housing which projects into the radiator chamber.

The object underlying the invention is to provide a viscous heater which ensures a very efficient heat exchange.

This object is solved by the features of claim 1. According to claim 1, the viscous heater is designed such that the circulating fluid is circulated between an inlet port and an outlet port. Each of the fins consist of upright walls which are extended along paths subdividing said rotating chamber into branched fluid passages through which the fluid is circulated.

According to the first embodiment of the application, the fins are in contact with the rear surface of the housing to establish a fluid channel.

A viscous heater set forth in Claim 2 is characterized in that the fins of the viscous heater set forth in Claim 1 project from an wall-surface side of the housing, and in that leading ends of the fins are not in contact with the opposite wall of the housing. This is the second embodyment.

In the viscous heater set forth in Claim 2, the fins are not in contact with the opposite wall of the housing. Accordingly, the heat is less likely to transfer directly from an wall-surface side of the housing to another wall-surface side thereof. Thus, less heat is radiated from the housing to the outside.

A viscous heater set forth in Claim 3 is characterized in that the fins of the viscous heater set forth in Claim 1 or 2 consist of upright walls which extend in a route-wise direction, and in that a fluid passage disposed in the radiator chamber is branched by the upright walls to have a fluid-passage width which is expanded more on an outer peripheral side thereof

In the viscous heater set forth in Claim 3, the flows of the circulating fluid, divided by the fluid passage branched in the radiator chamber, can circulate at a substantially equal flow velocity in the radiator chamber. Consequently, efficient heat exchange can be carried out in the outer peripheral region of the rotor where the heat is evolved considerably.

A viscous heater set forth in Claim 4 is characterized in that the radiator chamber of the viscous heater set forth in Claim 1, 2 or 3 includes a front radiator chamber neighboring in front of the heat-generating chamber, and a rear radiator chamber neighboring in rear of the heat-generating chamber, and in that the circulating fluid, taken in through the first port, is divided equally into the front radiator chamber and the rear radiator chamber.

In the viscous heater set forth in Claim 4, the circulating fluid is divided equally into the front radiator chamber and the rear radiator chamber. Accordingly, effective heat exchange can be carried out.

A viscous heater set forth in Claim 5 is characterized in that the housing of the viscous heater set forth in Claim 4 is provided with a flow divider for dividing the circulating fluid into the front radiator chamber and the rear radiator chamber, and in that the flow divider has a configuration free from exhibiting resistance.

In the viscous heater set forth in Claim 5, the flow divider divides the circulating fluid into the front radiator chamber and the rear radiator chamber. At this moment, the flow divider has a configuration free from exhibiting resistance. Consequently, the pressure loss is small in the passage, and the flow velocity of the circulating fluid is less likely to decrease in the entire heating circuit. Thus, the viscous heater is good in terms of heat-exchanging ability.

A viscous heater set forth in Claim 6 is characterized in that the fins of the viscous heater set forth in Claim 1, 2, 3, 4 or 5 has an equal surface in the front radiator chamber and the rear radiator chamber.

Suppose heat-exchanging rates differing in the front and rear radiator chambers cause the temperature difference in the circulating fluid flowing in the front radiator chamber and the rear radiator chamber. When the heat generation is equal on the front and rear surfaces of the rotor, heat transfer is carried out between the front and rear radiator chambers. Accordingly, thermal loss arises during the heat transfer. In this respect, in the viscous heater set forth in Claim 6, the heat-exchanging rates are equal in the front and rear radiator chambers, and there is no temperature difference in the circulating fluid flowing in the front radiator chamber and the rear radiator chamber. Thus, the viscous heater is less likely to cause the thermal loss.

A viscous heater set forth in Claim 7 is characterized in that the first port and the second port of the viscous heater set forth in Claim 1, 2, 3, 4, 5 or 6 are formed in an identical surface.

In the viscous heater set forth in Claim 7, the first port and the second port are formed in an identical surface. Consequently, the viscous heater can be manufactured readily, and is good in terms of boardability on a vehicle, or the like.

A viscous heater set forth in Claim 8 is characterized in that the first port and the second port of the viscous heater set forth in Claim 7 are disposed next to each other.

In the viscous heater set forth in Claim 8, the first port and the second port are disposed next to each other. Accordingly, the viscous heater is much better in terms of boardability on a vehicle, or the like.

### Brief Description of Drawings

Fig. 1 is a vertical cross-sectional view of a viscous heater of a First Preferred Embodiment.
Fig. 2 is a horizontal cross-sectional view of the viscous heater of the First Preferred Embodiment.
Fig. 3 is concerned with the viscous heater of the First Preferred Embodiment, and is a schematic diagram for illustrating a flow of circulating water therein.
Fig. 4 is a vertical cross-sectional view of a viscous heater of a Second Preferred Embodiment.
Fig. 5 is concerned with the viscous heater of the Second Preferred Embodiment, and is a schematic diagram for illustrating a flow of circulating water therein.
Fig. 6 is concerned with a viscous heater of a First Modified Version, and is a cross-sectional view of a flow divider thereof.
Fig. 7 is concerned with a viscous heater of a Second Modified Version, and is a cross-sectional view of a flow divider thereof.
Fig. 8 is concerned with a viscous heater of a Third Modified Version, and is a cross-sectional view of a flow divider thereof.

### Best Mode for Carrying Out the Invention

The First and Second Preferred Embodiments embodying the present invention set forth in the appended claims will be hereinafter described with reference to the drawings.

### (First Preferred Embodiment)

The viscous heater of the First Preferred Embodiment embodies Claims 1, 7 and 8.

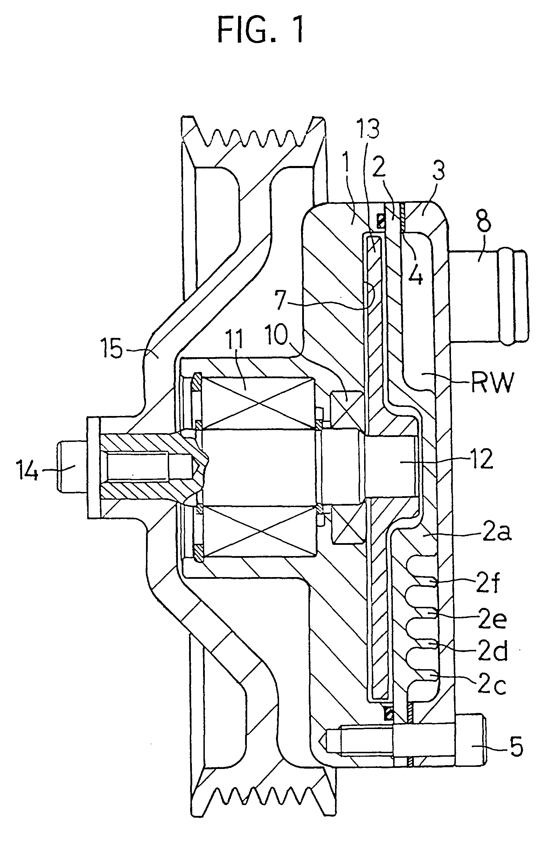

As illustrated in Fig. 1, in the viscous heater, a front housing 1, a rear plate 2 and a rear housing body 3 are overlapped and fastened by a plurality of through bolts 5 with a gasket 4 interposed between the rear plate 2 and the rear housing body 3. Further, a concavity is dented in a rear-end surface of the front housing 1, and forms a heat-generating chamber 7 together with a flat front-end surface of the rear plate 2. Furthermore, a rear-end surface of the rear plate 2 and an inner surface of the rear housing body 3 form a rear water jacket RW. The rear water jacket RW works as the rear radiator chamber neighboring the heat-generating chamber 7.

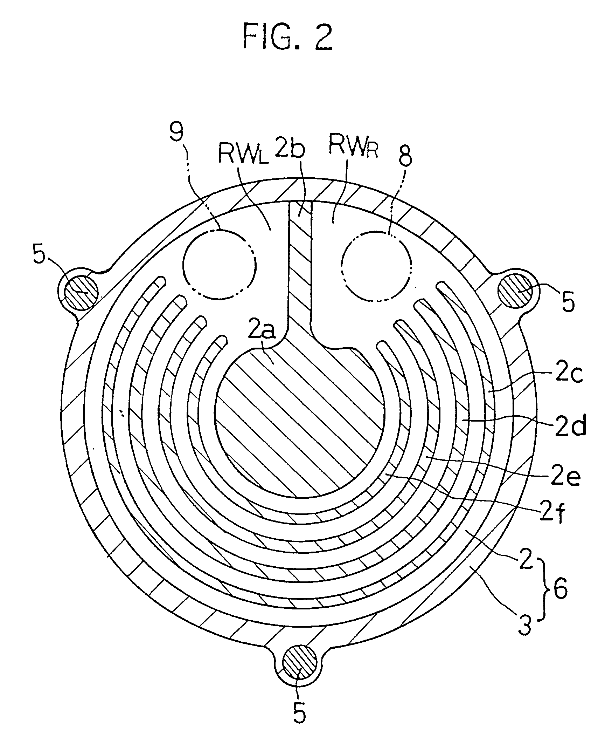

As illustrated in Fig. 2, in an outer region on a rear surface of the rear housing body 3, a water inlet port 8 and a water outlet port 9 are formed next to each other. The water inlet port 8 works as the first port for taking in circulating water, operating as the circulating fluid, from an external heating circuit (not shown). The water outlet port 9 works as the second port for delivering the circulating water out to the heating circuit. The water inlet port 8 and the water outlet port 9 are communicated with the rear water jacket RW. Thus, in the viscous heater, the water inlet port 8 and the water outlet port 9 are formed next to each other in the identical surface. As a result, the viscous heater can be manufactured readily, and is good in terms of boardability on a vehicle.

On a rear-end surface of the rear plate 2, a cylindrical convexity 2a is protruded in a central area, and a partition wall 2b, which extends from the convexity 2a in a radial direction, is protruded between the water inlet port 8 and the water outlet port 9. Moreover, on the rear-end surface of the rear plate 2, fins 2c through 2f are protruded in an axial direction. The fins 2c through 2f include 4 streaks of upright walls which extend like an arc around the convexity 2a from an area adjacent to the water inlet port 8 to another area adjacent to the water outlet port 9. As illustrated in Fig. 1, the leading end of the convexity 2a, the partition wall 2b and the fins 2c through 2f contacts with the inner surface of the rear housing body 3. Accordingly, in the viscous heater, heat is likely to be transmitted by the direct contact between the rear plate 2 and the rear housing body 3.

In addition, a shaft-sealing apparatus 10, and a bearing apparatus 11 are disposed in the front housing 1. The shaft-sealing apparatus 10 neighbors with the heat-generating chamber 7. By way of the shaft-sealing apparatus 10 and the bearing apparatus 11, a driving shaft 12 is held rotatably. At the trailing end of the driving shaft 12, a plate-shaped rotor 13 is press-fitted so that it can rotate in the heat-generating chamber 7. A silicone oil, working as the viscous fluid, is interposed in the space between the wall surface of the heat-generating chamber 7 and the outer surface of the rotor 13. Thus, in the viscous heater, there is no fear of leaking the silicone oil to the outside, because the shaft-sealing apparatus 10 is disposed between the heat-generating chamber 7 and the bearing apparatus 11 in the front housing 1. At the leading end of the driving shaft 12, a pulley 15 is fixed by a bolt 14. The pulley 15 is rotated by a vehicle engine via a belt.

In the viscous heater built-into a vehicle heating apparatus, the rotor 13 is rotated in the heat-generating chamber 7 when the driving shaft 12 is driven by the engine by way of the pulley 15. Accordingly, the silicone oil is sheared in the space between the wall surface of the heat-generating chamber 7 and the outer surface of the rotor 13, thereby generating heat. The resulting heat is heat-exchanged to the circulating water flowing in the rear water jacket RW, and the thus heated circulating water is used for heating a vehicle in the heating circuit.

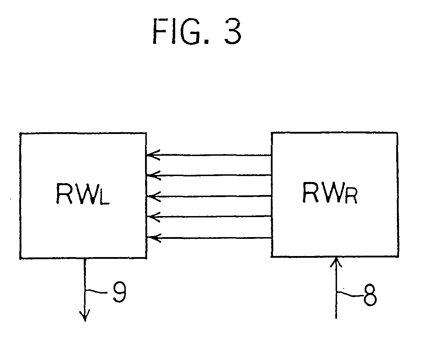

At this moment, as illustrated in Fig. 3, the circulating water is taken in into a right-side chamber RW_{R}, viewed from the rear of the rear water jacket RW, through the water inlet port 8. The circulating water then follows the 5 streaks of routes, which are divided by the convexity 2a, the partition wall 2b and the fins 2c through 2f, and arrives at a left-side chamber RW_{L}, viewed from the rear of the rear water jacket RW. Eventually, the circulating water is delivered out to the heating circuit through the water outlet port 9. Thus, in the viscous heater, the surface area of the wall surface constituting the rear water jacket RW is enlarged comparatively. In addition, in the viscous heater, there is no fear of short-circuiting or residing the circulating water in the rear water jacket RW, because the circulating water, taken in through the water inlet port 8, is circulated in a peripheral direction in the rear water jacket RW, and is delivered out to the external heating circuit through the water outlet port 9. Hence, full heat exchange can be carried out securely.

As a result, the viscous heater is capable of carrying out full heat exchange.

Note that, instead of the pulley 15, an electromagnetic clutch can be employed to intermittently drive the driving shaft 12.

### (Second Preferred Embodiment)

The viscous heater of the Second Preferred Embodiment embodies Claims 2 through 6.

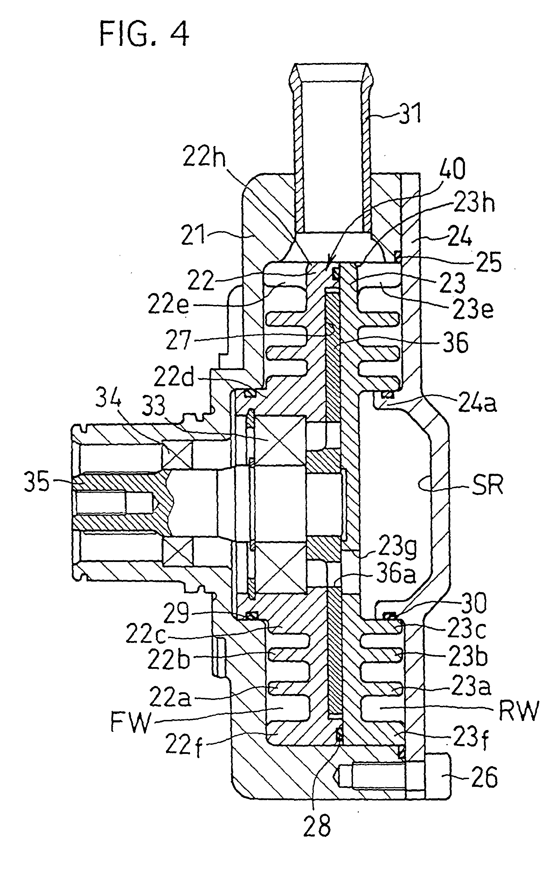

As illustrated in Fig. 4, in the viscous heater, a front plate 22 and a rear plate 23 are accommodated in a cup-shaped front housing body 21. Moreover, at an end of the front housing body 21, a plate-shaped rear housing body 24 is connected by bolts 26 via an O-ring 25.

In a rear-end surface of the front plate 22, a concavity is dented, and forms a heat-generating chamber 27 together with a flat front-end surface of the rear plate 23. Around the heating chamber 27, there is disposed an O-ring 28. Further, on the central portion of the front plate 22, there is projected a boss 22d which is made integral with a fin 22c later described. In an outer peripheral surface of the boss 22d, there is disposed an O-ring 29 between the front housing body 21 and the boss 22d. The front-end surface of the front plate 22 and the inner surface of the front housing body 21 form a front water jacket FW. The front water jacket FW works as the front radiator chamber neighboring in front of the heat-generating chamber 27. Furthermore, on the central portion of the rear housing body 24 as well, there is projected a boss 24a. In an outer peripheral surface of the boss 24a, there is disposed an O-ring 30 between the outer peripheral surface of the boss 24a and a fin 23c of the rear plate 23 later described. The rear-end surface of the rear plate 23 and the inner surface of the rear housing body 24 form a rear water jacket RW. The rear water jacket RW works as the rear radiator chamber neighboring in rear of the heat-generating chamber 27.

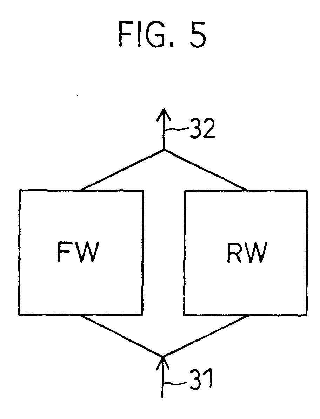

Around the front plate 22, there is projected a supporter wall 22f forwardly in an axial direction. In the supporter wall 22f, an opening 22e and another similar opening (not shown) are drilled through in a radial direction. The opening 22e communicates with a water inlet port 31 later described. The another opening communicates with a water outlet port 32 (see Fig. 5.). Moreover, around the rear plate 23 as well, there is projected a supporter wall 23f rearwardly in an axial direction. In the supporter wall 23f as well, an opening 23e and another similar opening (not shown) are drilled through in a radial direction. The opening 23e communicates with the water inlet port 31. The other opening communicates with the water outlet port 32. The rims of the front plate 22 and rear plate 23, disposed between the opening 22e and 23e, constitute a flow divider 40. On the flow divider 40, there are formed chamfered portions 22h, 23h on the side of the water inlet port 31. The chamfered portions 22h, 23h work as the configuration free from exhibiting resistance. Note that the portion around the another openings communicating with the water outlet port 32 is constructed likewise.

Further, on the front-end surface of the front plate 22, fins 22a through 22c (Note that, however, the fin 22c is formed as a ring shape to be integral with the boss 22d.) are protruded in an axial direction in the front water jacket FW. The fins 22a through 22d include 3 streaks of upright walls which extend like an arc around an axis inside the supporter wall 22f. Likewise, on the rear-end surface of the rear plate 23, fins 23a through 23c (Note that, however, the fin 23c is formed as a ring shape) are protruded in an axial direction in the rear water jacket RW. The fins 23a through 23c include 3 streaks of upright walls which extend like an arc around an axis inside the supporter wall 23f. Note that the leading end of the fins 22a through 22c is not brought into contact with the inner surface of the front housing body 21, and that the leading end of the fins 23a through 23c is not brought into contact with the inner surface of the rear housing body 24. Consequently, in the viscous heater, heat is less likely to be transferred directly from the front plate 22 to the front housing body 21, and is less likely to be transferred directly from the rear plate 23 to the rear housing body 24. Thus, the heat is radiated less from the housing to the outside. Furthermore, as the flow passages (specific routes) of the water jackets FW, RW approach the outer peripheral side, the flow-passage widths thereof are enlarged by the fins 22a through 22c, and by the fins 23a through 23c. Moreover, the surface areas of the fins 22a through 22c are made equal to those of the fins 23a through 23c.

In addition, between the rear plate 23 and the rear housing body 24, there is formed a reservoir chamber SR by the inner surface of the fin 23c and the rear housing body 24. A supplier hole 23g and a collector hole (not shown) are drilled through the rear plate 23 in a longitudinal direction, and are communicated with the reservoir chamber SR.

On an upper side of the peripheral surface of the front housing body 21, there are formed the water inlet port 31 and the water outlet port 32 (see Fig. 5.) next to each other. The water inlet port 31 works as the first port for taking in circulating water, operating as the circulating fluid, from an external heating circuit (not shown). The water outlet port 32 works as the second port for delivering the circulating water out to the heating circuit. The water inlet port 31 and the water outlet port 32 are communicated with the front water jacket FW and the rear water jacket RW by way of the openings 22e, 23e, and the like. Thus, in the viscous heater, the water inlet port 31 and the water outlet port 32 are formed next to each other in the identical surface. As a result, the viscous heater can be manufactured readily, and is good in terms of boardability on a vehicle.

In addition, in the boss 22d of the front plate 22, there is disposed a bearing apparatus 33 which includes a built-in shaft-sealing apparatus. In the front housing 21, there is disposed a bearing apparatus 34. By way of the bearing apparatuses 33, 34, a driving shaft 35 is held rotatably. At the trailing end of the driving shaft 35, a plate-shaped rotor 36 is press-fitted so that it can rotate in the heat-generating chamber 27. A communication hole 36a is drilled through the rotor 36 in a longitudinal direction. In the space between the wall surface of the heat-generating chamber 27 and the outer surface of the rotor 36, there is interposed a silicone oil working as the viscous fluid. At the leading end of the driving shaft 35, similarly to the First Preferred Embodiment, there is fixed a pulley (not shown). The pulley is rotated by a vehicle engine via a belt.

As illustrated in Fig. 5, in the thus constructed viscous heater, the flow divider 40 divides the flow of the circulating water, taken in through the water inlet port 31, into the front water jacket FW and the rear water jacket RW equally. On this occasion, the pressure loss is small in the passages, and the flow velocity of the circulating fluid is less likely to drop in the entire heating circuit, because the chamfered portions 22h, 23h are formed on the flow divider 40. Then, by way of the openings 22e, 23e, the circulating water is divided into the front water jacket FW and the rear water jacket RW equally. Thereafter, the equally-divided parts of the circulating water are circulated by the fins 22a through 22c, and by the fins 23a through 23c at an equal flow velocity in the front and rear water jackets FW, RW, respectively, and are finally delivered out to the outside heating circuit through the water outlet port 32. In this case, the heat generation is carried out in the outer peripheral area of the rotor 36 considerably. However, in the outer-peripheral-area flow passages whose flow-passage widths are enlarged, heat exchange can be carried out by the enlarged surface area in proportion to the heat generation.

As a result, in the thus constructed viscous heater as well, effective heat exchange can be carried out. Unless otherwise specified, the Second Preferred Embodiment operates and produces advantages in the same manner as the First Preferred Embodiment.

### (First Modified Version)

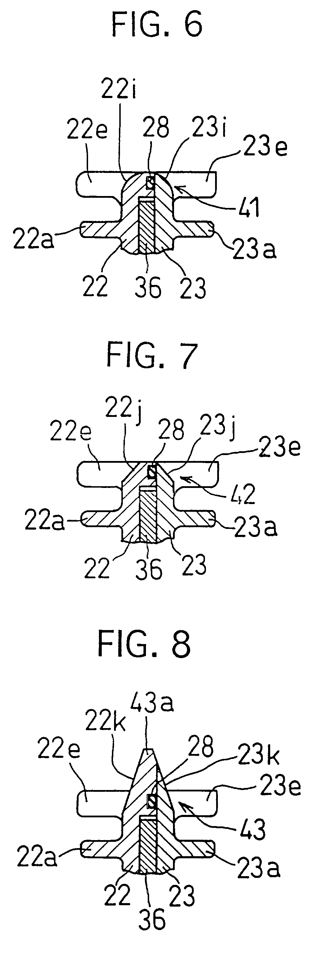

In the First Modified Version, a flow divider 41 shown in Fig. 6 is employed. On the flow divider 41, there are formed arcs 22i, 23i on the side of the water inlet port 31. The arcs 22i, 23i work as the configuration free from exhibiting resistance. Note that the portion around the another openings communicating with the water outlet port 32 is constructed likewise. Unless otherwise specified, the arrangements of the First Modified Version are identical with those of the Second Preferred Embodiment.

The viscous heater of the First Modified Version can also operate and produce advantages in the same manner as the Second Preferred Embodiment.

### (Second Modified Version)

In the Second Modified Version, a flow divider 42 shown in Fig. 7 is employed. On the flow divider 42, there are formed tapered portions 22j, 23j on the side of the water inlet port 31. The tapered portions 22j, 23j work as the configuration free from exhibiting resistance. Note that the portion around the another openings communicating with the water outlet port 32 is constructed likewise. Unless otherwise specified, the arrangements of the Second Modified Version are identical with those of the Second Preferred Embodiment.

The viscous heater of the Second Modified Version can also operate and produce advantages in the same manner as the Second Preferred Embodiment.

### (Third Modified Version)

In the Third Modified Version, a flow divider 43 shown in Fig. 8 is employed. The flow divider 43 is formed by protruding part of the front plate 22 and the rear plate 23, disposed between the openings 22e and 23e, in an outer peripheral direction. On the flow divider 43, there are formed tapered portions 22k, 23k on the side of the water inlet port 31. The tapered portions 22k, 23k work as the configuration free from exhibiting resistance. Note that the portion around the another openings communicating with the water outlet port 32 is constructed likewise. Unless otherwise specified, the arrangements of the Third Modified Version are identical with those of the Second Preferred Embodiment.

The viscous heater of the Third Modified Version can also operate and shows advantages in the same manner as the Second Preferred Embodiment.

## Claims

1. A viscous heater, comprising:
a housing (1, 21) in which a heat-generating chamber (7, 27) and a radiator chamber are formed, said radiator chamber being adjacent to said heat-generating chamber and having means for circulating a circulating fluid through said radiator chamber;
wherein said circulating fluid is circulated between an inlet port (8) and an outlet port (9);
a driving shaft (12, 35) held rotatably to said housing (1, 21) by way of a bearing apparatus;
a rotor (13; 36) disposed in said heat-generating chamber (7, 27) for rotation by said driving shaft (12, 35); and
a viscous fluid interposed in a space between a wall surface of said heat-generating chamber (7, 27) and an outer surface of said rotor (13; 36) for generating heat upon rotation of said rotor (13; 36);
wherein at least one fin (2c-2f; 22a-22c, 23a-23c) is formed in said housing and projects into said radiator chamber to enlarge the surface area of a wall surface constituting said radiator chamber,
**characterized in that**
each of said fins consists of upright walls which are extended along paths subdividing said radiator chamber into branched fluid passages.

2. A viscous heater according to claim 1, wherein said fins (2c-2f; 22a-22c, 23a-23c) projects from a wall surface side of said housing (1, 21), and leading ends of the fins (2c-2f; 22a-22c, 23a-23c) are not in contact with the opposite wall of said housing (1, 21).

3. A viscous heater according to claim 1 or 2, wherein said upright walls of said fins (2c-2f; 22a-22c, 23a-23c) extend in a route-wise direction, wherein a fluid passage width is expanded on an outer peripheral side thereof.

4. A viscous heater according to claim 1, 2 or 3, wherein said radiator chamber includes a front radiator chamber neighboring in front of said heat-generating chamber (7, 27) and a rear radiator chamber neighboring in rear of said heat-generating chamber (7, 27), and said circulating fluid taken in through said inlet port (8) is divided equally into the front radiator chamber and the rear radiator chamber.

5. A viscous heater according to claim 4, wherein said housing (1, 21) is provided with a flow divider for dividing said circulating fluid into said front radiator chamber and said rear radiator chamber, and the flow divider has a configuration free from exhibiting resistance.

6. A viscous heater according to claim 1, 2, 3, 4 or 5, wherein said fins (2c-2f; 22a-22c, 23a-23c) have an equal surface in said front radiator chamber and said rear radiator chamber.

7. A viscous heater according to claim 1, 2, 3, 4, 5 or 6, wherein said inlet port (8) and said outlet port (9) are formed in an identical surface.

8. A viscous heater according to claim 7, wherein said inlet port (8) and said outlet port (9) are disposed next to each other.

## Patentansprüche

1. Viskositätsheizung mit:
einem Gehäuse (1, 21), in dem eine Wärmeerzeugungskammer (7, 27) und eine Radiatorkammer ausgebildet sind, wobei die Radiatorkammer benachbart ist zu der Wärmeerzeugungskammer und eine Einrichtung hat zum Zirkulieren eines zirkulierenden Fluids durch die Radiatorkammer hindurch;
wobei das zirkulierende Fluid zirkuliert wird zwischen einem Einlassanschluss (8) und einem Auslassanschluss (9) ;
einer Antriebswelle (12, 35), die drehbar gehalten wird an dem Gehäuse (1, 21) mittels eines Lagergeräts;
einem Rotor (13; 36), der in der Wärmeerzeugungskammer (7, 27) angeordnet ist zum Drehen der Antriebswelle (12, 35); und
einem viskosen Fluid, das in einen Raum zwischen einer Wandfläche der Wärmeerzeugungskammer (7, 27) und einer Außenfläche des Rotors (13; 36) zwischengesetzt ist zum Erzeugen von Wärme beim Drehen des Rotors (13; 36);
wobei zumindest eine Rippe (2c-2f; 22a-22c, 23a-23c) in dem Gehäuse ausgebildet ist und in die Radiatorkammer hinein vorsteht zum Vergrößern des Flächenbereichs einer Wandfläche, die die Radiatorkammer bildet,
**dadurch gekennzeichnet, dass**
jede der Rippen aus aufrechten Wänden besteht, die sich entlang Bahnen erstrecken, die die Radiatorkammer in Zweigfluidkanäle unterteilen.

2. Viskositätsheizung nach Anspruch 1, wobei die Rippen (2c-2f; 22a-22c, 23a-23c) von einer Wandflächenseite des Gehäuses (1, 21) vorstehen und führende Enden der Rippen (2c-2f; 22a-22c, 23a-23c) sich nicht in Kontakt befinden mit der gegenüberliegenden Wand des Gehäuses (1, 21).

3. Viskositätsheizung nach Anspruch 1 oder 2, wobei die aufrechten Wände der Rippen (2c-2f; 22a-22c, 23a-23c) sich in einer streckenartigen Richtung erstrecken, wobei eine Fluidkanalbreite sich an einer äußeren Umfangsseite erweitert.

4. Viskositätsheizung nach Anspruch 1, 2 oder 3,wobei die Radiatorkammer eine vordere Radiatorkammer in der Nachbarschaft einer Vorderseite der Wärmeerzeugungskammer (7, 27) und eine hintere Radiatorkammer in der Nachbarschaft der Rückseite der Wärmeerzeugungskammer (7, 27) umfasst, und wobei das durch den Einlassanschluss (8) aufgenommene zirkulierende Fluid gleichmäßig geteilt wird in die vordere Radiatorkammer und die hintere Radiatorkammer hinein.

5. Viskositätsheizung nach Anspruch 4, wobei das Gehäuse (1, 21) mit einem Strömungsteiler versehen ist zum Teilen des zirkulierenden Fluids in die vordere Radiatorkammer und die hintere Radiatorkammer hinein, und wobei der Strömungsteiler eine Konfiguration hat, die keinen Widerstand ausübt.

6. Viskositätsheizung nach Anspruch 1, 2, 3, 4 oder 5, wobei die Rippen (2c-2f; 22a-22c, 23a-23c) eine gleichmäßige Fläche in der vorderen Radiatorkammer und der hinteren Radiatorkammer haben.

7. Viskositätsheizung nach Anspruch 1, 2, 3, 4, 5 oder 6, wobei der Einlassanschluss (8) und der Auslassanschluss (9) in einer identischen Fläche ausgebildet sind.

8. Viskositätsheizung nach Anspruch 7, wobei der Einlassanschluss (8) und der Auslassanschluss (9) nebeneinender angeordnet sind.

## Revendications

1. Dispositif de chauffage à fluide visqueux, comprenant :
un logement (1, 21) dans lequel une chambre de génération de chaleur (7, 27) et une chambre de radiateur sont formées, ladite chambre de radiateur étant contiguë à ladite chambre de génération de chaleur et comportant des moyens pour faire circuler un fluide de circulation à travers ladite chambre de radiateur ;
dans lequel ledit fluide de circulation circule entre un orifice d'entrée (8) et un orifice de sortie (9) ;
un arbre d'entraînement (12, 35) maintenu de manière rotative sur ledit logement (1, 21) au moyen d'un dispositif de support ;
un rotor (13 ; 36) disposé dans ladite chambre de génération de chaleur (7, 27) pour être mis en rotation par ledit arbre d'entraînement (12, 35) ; et
un fluide visqueux interposé dans un espace entre une surface de paroi de ladite chambre de génération de chaleur (7, 27) et une surface extérieure dudit rotor (13 ; 36) pour générer de la chaleur lors de la rotation dudit rotor (13 ; 36) ;
dans lequel au moins une ailette (2c-2f ; 22a-22c, 23a-23c) est formée dans ledit logement et s'étend dans ladite chambre de radiateur afin d'agrandir l'aire d'une surface de paroi constituant ladite chambre de radiateur,
**caractérisé en ce que** :
chacune desdites ailettes consiste en des parois verticales qui s'étendent le long de trajets subdivisant ladite chambre de radiateur en passages de fluide ramifiés.

2. Dispositif de chauffage à fluide visqueux selon la revendication 1, dans lequel lesdites ailettes (2c-2f ; 22a-22c, 23a-23c) s'étendent à partir d'un côté de surface de paroi dudit logement (1, 21) et les extrémités avant des ailettes (2c-2f ; 22a-22c, 23a-23c) ne sont pas en contact avec la paroi opposée dudit logement (1, 21).

3. Dispositif de chauffage à fluide visqueux selon la revendication 1 ou 2, dans lequel lesdites parois verticales desdites ailettes (2c-2f ; 22a-22c, 23a-23c) s'étendent dans le sens du trajet, dans lequel une largeur de passage de fluide est augmentée sur un côté périphérique extérieur de celui-ci.

4. Dispositif de chauffage à fluide visqueux selon la revendication 1, 2 ou 3, dans lequel ladite chambre de radiateur comprend une chambre de radiateur avant voisine et devant ladite chambre de génération de chaleur (7, 27) et une chambre de radiateur arrière voisine et derrière ladite chambre de génération de chaleur (7, 27), et ledit fluide de circulation entré par ledit orifice d'entrée (8) est divisé de manière égale entre la chambre de radiateur avant et la chambre de radiateur arrière.

5. Dispositif de chauffage à fluide visqueux selon la revendication 4, dans lequel ledit logement (1, 21) est pourvu d'un diviseur d'écoulement pour diviser ledit fluide de circulation entre ladite chambre de radiateur avant et ladite chambre de radiateur arrière, et le diviseur d'écoulement présente une configuration exempte de toute résistance.

6. Dispositif de chauffage à fluide visqueux selon la revendication 1, 2, 3, 4 ou 5, dans lequel lesdites ailettes (2c-2f ; 22a-22c, 23a-23c) ont une surface égale dans ladite chambre de radiateur avant et dans ladite chambre de radiateur arrière.

7. Dispositif de chauffage à fluide visqueux selon la revendication 1, 2, 3, 4, 5 ou 6, dans lequel ledit orifice d'entrée (8) et ledit orifice de sortie (9) sont formés dans une même surface.

8. Dispositif de chauffage à fluide visqueux selon la revendication 7, dans lequel ledit orifice d'entrée (8) et ledit orifice de sortie (9) sont disposés l'un à côté de l'autre.
